Europäisches Patentamt

European Patent Office

Office européen des brevets

(11) Numéro de publication : **0 318 569 B1**

(12)

# FASCICULE DE BREVET EUROPEEN

(45) Date de publication du fascicule du brevet :
**02.09.92 Bulletin 92/36**

(51) Int. Cl.$^5$ : **B27M 1/08,** D21C 9/00,
C04B 18/26, C04B 18/28,
B27K 5/00, C09K 17/00

(21) Numéro de dépôt : **88905882.2**

(22) Date de dépôt : **23.06.88**

(86) Numéro de dépôt international :
**PCT/FR88/00333**

(87) Numéro de publication internationale :
**WO 88/10184 29.12.88 Gazette 88/28**

(54) PROCEDE ET INSTALLATION DE PRODUCTION INDUSTRIELLE D'AGREGATS STABILISES.

(30) Priorité : **23.06.87 FR 8708913**

(43) Date de publication de la demande :
**07.06.89 Bulletin 89/23**

(45) Mention de la délivrance du brevet :
**02.09.92 Bulletin 92/36**

(84) Etats contractants désignés :
**AT BE CH DE GB IT LI LU NL SE**

(56) Documents cités :
**WO-A-85/01688
AU-A- 63 265
CH-A- 510 719
DE-A- 2 119 397
DE-A- 2 744 425
FR-A- 2 409 247
FR-A- 2 567 119
FR-A- 2 599 736**

(56) Documents cités :
**US-A- 3 243 327
US-A- 3 825 231
US-A- 4 066 216
US-A- 4 427 376
US-A- 4 528 037**

(73) Titulaire : **AGRESTA
27, Avenue Franklin Roosevelt
F-35400 Saint-Malo (FR)**

(72) Inventeur : **Guidat, Gilbert
14, rue Jean Bioletti
F-88000 Epinal Saint Laurent (FR)**
Inventeur : **Guidat de Queiroz, Claudine
17, rue St-Julien
F-54000 Nancy (FR)**

(74) Mandataire : **Hubert, Philippe et al
Cabinet Beau de Loménie 55, rue
d'Amsterdam
F-75008 Paris (FR)**

EP 0 318 569 B1

## Description

La présente invention se rapporte à une installation industrielle pour la production en flux continu de parcelles ou particules stabilisées à partir de déchets en bois. Une installation de ce type comme defini dans le preambule de la revendication 1 est connue par exemple du document US-A-4 528 037.

Plus généralement et sans limitation, l'installation industrielle selon l'invention peut utiliser comme produit brut tous les matériaux et toutes les matières de même nature que le bois, c'est-à-dire à caractère et propriétés ligno-cellulosiques pour la mise en oeuvre industrielle du procédé de stabilisation des déchets de bois.

L'installation industrielle selon l'invention à pour but de produire en grandes quantités des particules ou parcelles élémentaires de déchets de bois stabilisés, déchets traités chimiquement mais non dénaturés physiquement, ,c'est-à-dire dotés de toutes les propriétés physiques intéressantes du bois : isolation thermique, phonique et acoustique, masse thermique, faible densité.

En effet, l'aspect général du bois reste parfaitement préservé. Le traitement de stabilisation apporte les qualités essentielles qui manquent au bois pour lui conférer des possibilités d'applications multiples dans tous les domaines agricoles et industriels et notamment dans le bâtiment et tous les systèmes constructifs.

On a cherché et on continue à le faire avec plus ou moins de succès, à incorporer des matières ligno-cellulosiques et en particulier des déchets de bois aux matériaux de construction et notamment aux ciments et bétons.

On prépare un mélange homogène à partir de ciment et de matières classiques en bâtiment, auquel on incorpore des déchets ligno-cellulosiques bruts ou traités en présentations physiques les plus diverses, fonction des qualités. et des propriétés du produit à obtenir.

Pour accélérer la prise du ciment, on ajoute classiquement en proportions variables du chlorure de calcium ou autre sel équivalent. Cet adjuvant s'avère bien connu en bâtiment et d'usage presque universel notamment dans les centrales de production de béton. Il contribue à l'obtention d'un mélange homogène et à une intime liaison entre les matières ligno-cellulosiques et le ciment pour former un produit compact et solide.

Le soin particulier apporté dans la fabrication de ces produits ne permet pas d'échapper à divers inconvénients ultérieurs et comportement de ce type de produits, inconvénients liés à la structure même des matières ligno-cellulosiques qui ne perdent pas complètement leurs propriétés de variations dimensionnelles et de glissement de structures, sources de fissurations.

Or, chacun sait qu'en bâtiment, la stabilité et le caractère inerte du matériau sont des qualités essentielles, hautement recherchées et appréciées.

Malheureusement, les produits décrits ci-dessus et objets de nombreux brevets ne correspondent pas aux attentes des professionnels du bâtiment car ne présentent pas toutes les garanties de tenue dans le temps.

En fait, ces produits, parfaitement connus et largement disponibles sur un plan commercial, ne sont que d'un usage limité car leurs propriétés de départ, isolation thermique, résistance mécanique, isolation phonique se dégradent dans le temps.

Le produit obtenu par l'installation diffère largement des produits antérieurs car il s'agit d'une véritable matière première à utiliser soit directement en remplissage par gravité ou compacté ou moulé soit en association avec d'autres produits. Ainsi cette matière première peut entrer en tant que composant dans les mélanges utilisés en bâtiment et en agriculture : bétons, mortiers...produits semi-oeuvrés tels que blocs de construction, agglomérés simples ou composites, parois, panneaux de cloisonnement, de bardage, etc...ainsi que mélanges fertiligènes, composition d'amendement des sols....

Le procédé mis en oeuvre par l'installation selon l'invention décrite ci-après apporte le correctif nécessaire à l'ensemble des propriétés physiques du bois pour lui conférer les propriétés recherchées et une grande universalité d'applications.

On peut citer, à titre d'exemple, les principales qualités et propriétés ainsi conférées qui s'énoncent comme suit :

. il s'agit d'un produit stable dimensionnellement imputrescible , inerte physiquement et chimiquement : qualités essentielles recherchées et appréciées dans le domaine du bâtiment ;

. intégré aux bétons, il présente des caractéristiques de résistance au feu permettant son emploi en couches protectrices et en panneaux coupe-feu ;

. neutre chimiquement, il n'attaque pas les composants des mortiers et bétons. Il ne modifie pas l'action des liants hydrauliques en raison de son potentiel d'hydrogène voisin de la neutralité.

Le produit obtenu par le procédé industriel et l'installation industrielle selon l'invention remédie aux inconvénients classiques de manque de stabilité à la chaleur et de maintien dans le temps des mélanges traditionnels à base de bois et de ciment.

Sa stabilité dimensionnelle constante et permanente lui permet de couvrir les applications les plus diverses dans les domaines les plus variés.

On peut ainsi citer, de façon non exhaustive, les applications suivantes :

. applications classiques en composants dans les mélanges utilisés en bâtiment : remplissage d'isolation, confection de panneaux et de blocs de construction préfabriqués ; matière première entrant dans la fabrication des bétons legers, élastiques, clouables ;

. applications domestiques et industrielles : accumulation de chaleur, isolation au feu, isolation thermique et phonique ;

. applications agricoles et horticoles en tant que substrat de culture permettant l'allègement des sols, la régulation de la température et de l'hygrométrie et en tant que support de compostage ;

. applications particulières : filtration, litières pour animaux...

La présente invention a pour but de produire industriellement en grandes quantités et en flux continu régulé le produit d'applications universelles ci-dessus.

Comme déjà indiqué ci-dessus, les nombreuses qualités et propriétés de ce produit isolant thermique et phonique, stable, imputrescible, ininflammable et léger lui ouvrent de multiples possibilités d'applications dans les domaines les plus variés dont on indiquera ci-après quelques exemples d'une liste très longue :

. Isolation de remplissage en bâtiment et applications industrielles.

. Isolation par l'extérieur des maisons et bâtiments.

. Absorbeur pour capteurs solaires et accumulation de calories pour chauffe-eau.

. Applications en bâtiments : matière première entrant dans la fabrication de bétons et mortiers légers, élastiques, clouables.

. Isolation thermique et phonique et absorbeur hygroscopique.

. Matière première à mélanger aux liants hydrauliques divers ainsi qu'à toutes les résines synthétiques pour la réalisation d'une agglomération de granulats sous les formes les plus diverses.

. Isolation au feu, par exemple en sous-face des hourdis.

. Applications dans le secteur agricole et horticole en tant que substrat de culture apportant la régulation de la température et de l'hygrométrie et une amélioration de l'oxygénation.'"Il retient l'eau, aère les sols et favorise le métabolisme des végétaux.

. Engrais structuré à base de granulats ligno-cellulosiques.

Par ailleurs, son procédé de fabrication s'avère particulièrement conforme aux souhaits actuels de notre économie industrielle : utilisation de déchets et faible consommation énergétique dans la mise en oeuvre et le traitement.

L'invention se rapporte à une installation de production industrielle pour la production en flux continu de parcelles ou particules stabilisées à partir de déchets de bois comme définie dans la revendication 1.

L'installation selon l'invention présente classiquement les avantages de la production industrielle en flux continu ainsi que de nombreux autres.

Ne pouvant les indiquer tous, on se contentera d'en indiquer ci-après-les principaux :

. production en flux continu régulé

. faible consommation d'énergie

. facilité et rapidité d'implantation

. fonctionnement entièrement continu

. rejets non polluants

. rentabilité importante

. investissement modéré

. valorisation des déchets de bois

. entretien faible et peu fréquent

. sécurité assurée pour le matériel et les personnes

. quantités produites possibles notablement plus importantes.

Les caractéristiques techniques du procédé perfectionné et de l'installation destinée à le mettre en oeuvre et d'autres avantages sont consignés dans la description qui suit effectuée à titre d'exemple non limitatif en référence aux dessins accompagnants dans lesquels :

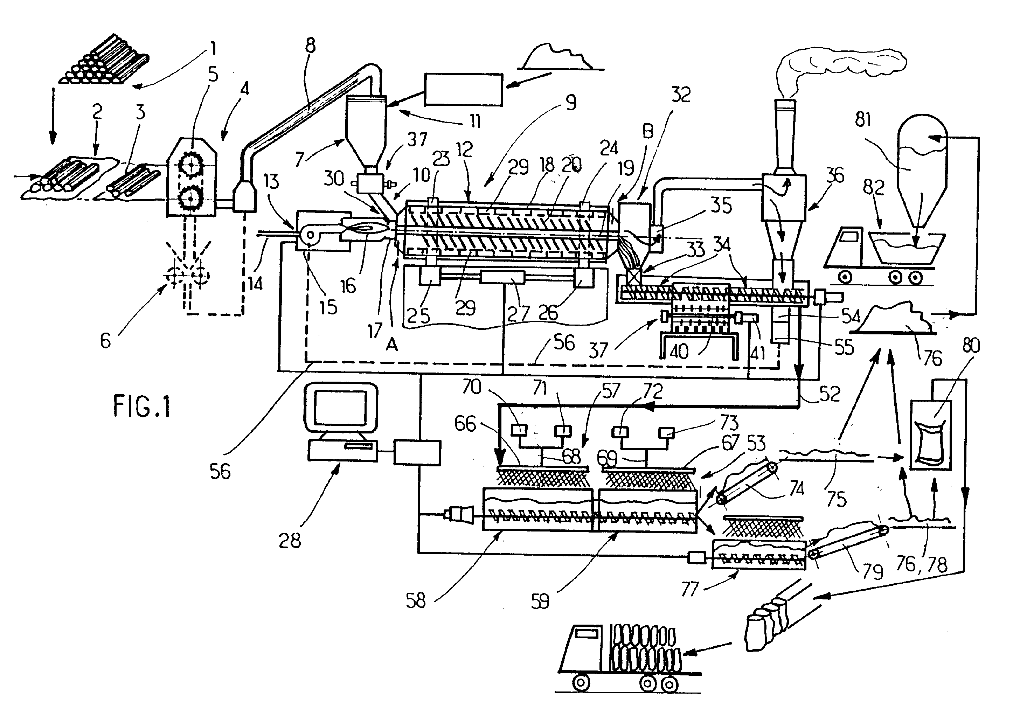

. la figure 1 est un organigramme en schéma fonctionnel correspondant à l'installation complète ;

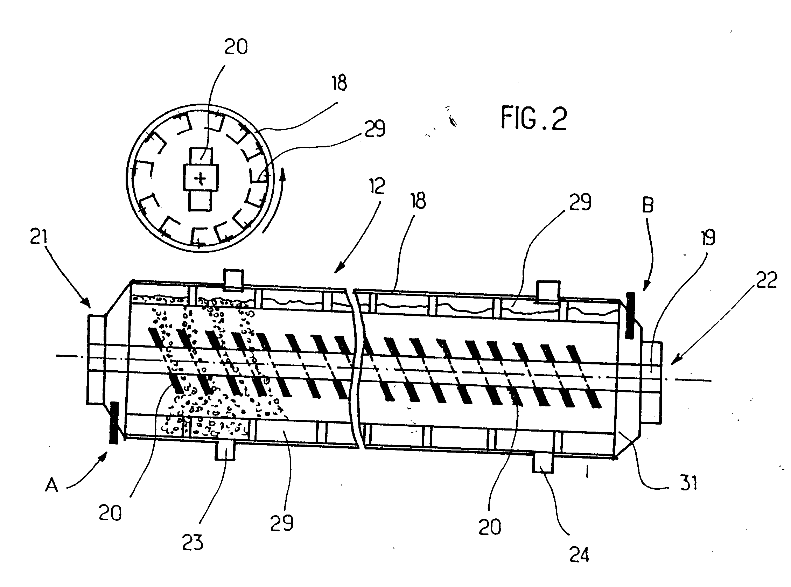

. la figure 2 est une vue schématique double en coupe longitudinale et transversale du foui rotatif ;

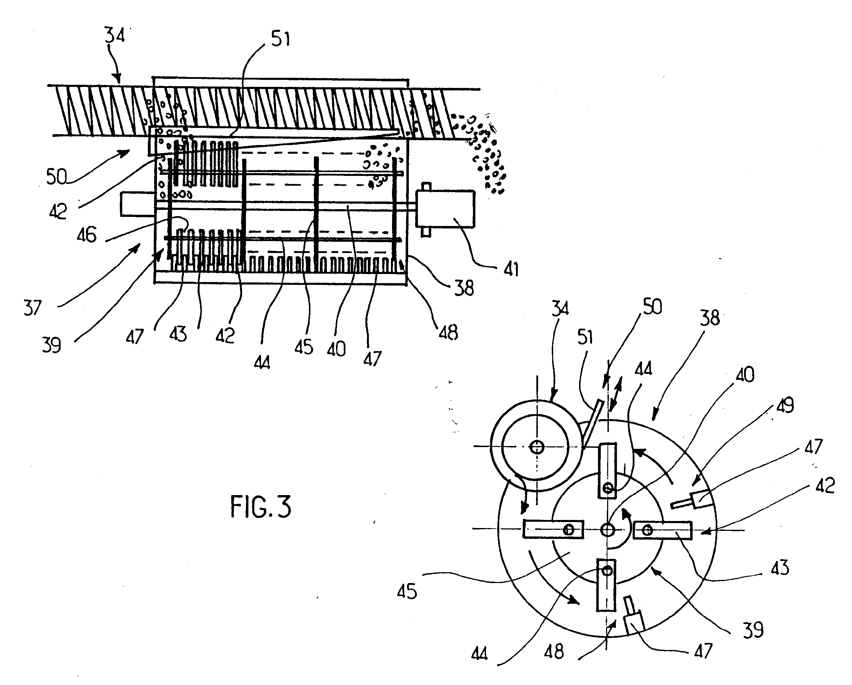

. la figure 3 est une vue schématique double en coupe longitudinale et transversale du concasseur-défibreur à marteaux;

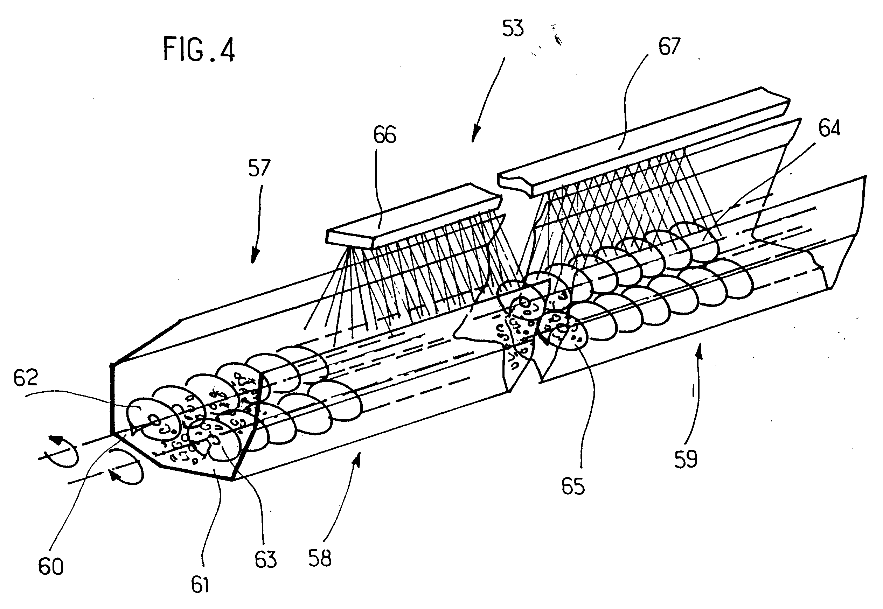

. la figure 4 est une vue schématique en perspective du malaxeur linéaire pulvérisateur double ;

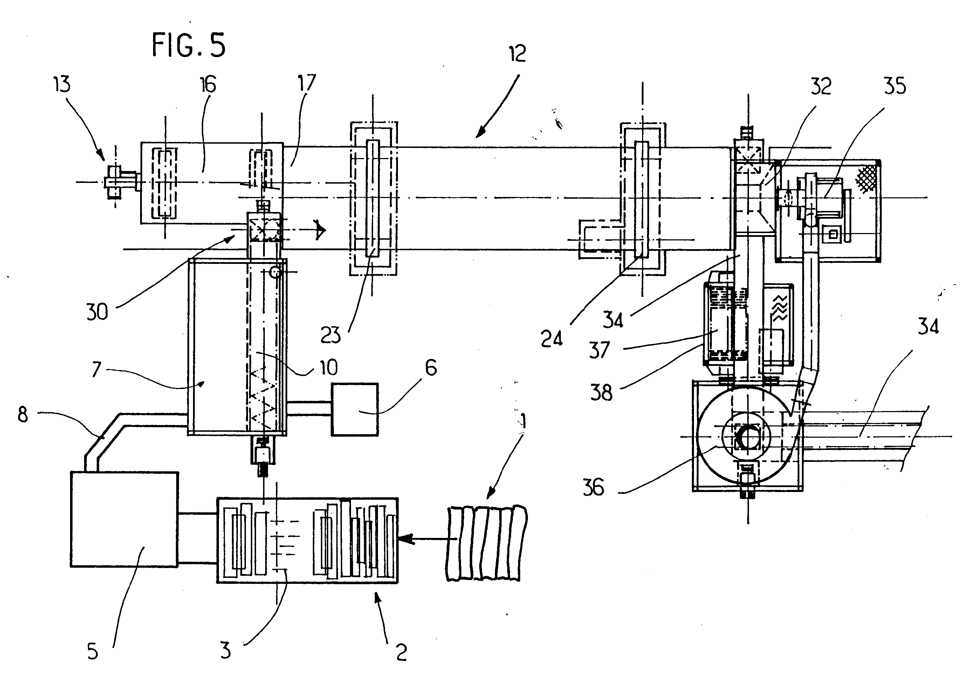

. la figure 5 est une vue en plan de l'unité de traitement mécanique et thermique ;

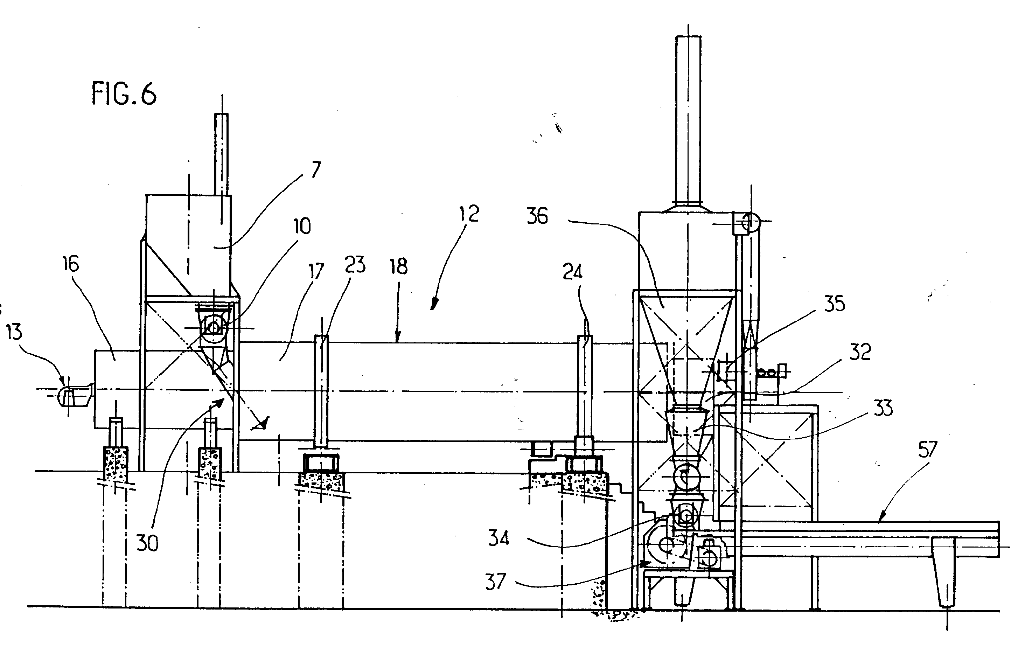

. la figure 6 est une vue de profil de l'unité de traitement mécanique et thermique ;

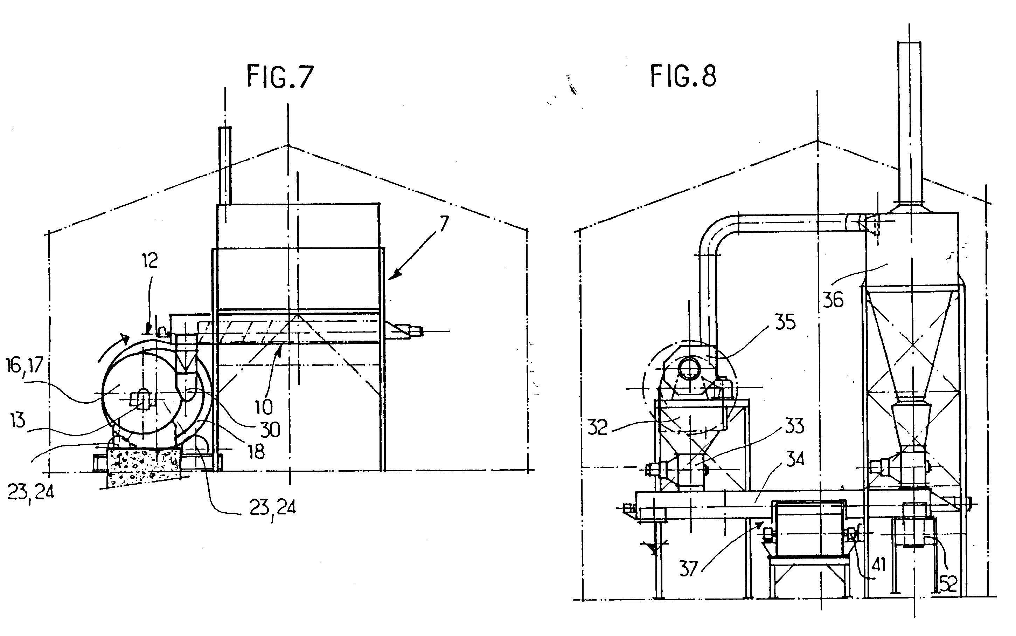

. la figure 7 est une vue en élévation de l'installation au niveau de l'entrée de four ;

. la figure 8 est une vue en élévation de l'installation au niveau de la vis de transfert et du concasseur-défibreur.

On décrira ci-après les différents postes et organes constituant la chaîne de fabrication industrielle en flux continu régulé d'agrégats stabilisés tout en expliquant leur fonctionnement, la progression et le traitement du produit à différents stades et le procédé mis en oeuvre.

L'installation conforme à l'invention permet de produire en continu des quantités dites industrielles c'est-à-dire une production minimale horaire continue de 20 à 25 m³. Cette invention vise et permet bien entendu des productions- plus importantes nécessitées par les applications multiples de ce produit et un fonctionnement continu jour et nuit entièrement régulé .

L'installation selon la présente invention est destinée à mettre en oeuvre le procédé industriel perfectionné décrit'ci-après simultanément, procédé qui comporte les sept phases principales suivantes:

– traitement mécanique initial
– concassage-martelage primaire
– déshydratation et stérilisation
– traitement mécanique ultérieur
– traitement chimique
– traitement supplémentaire
– séchage-stabilisation

terminées par un traitement supplémentaire d'application spécifique.

Le procédé présente une variante selon laquelle toutes les phases de traitement mécanique s'effectuent dans un premier stade.

La chaîne de production formant l'installation selon l'invention se compose de la succession des postes suivants, telle que représentée sur la figure 1. Les variantes du procédé et de l'installation correspondent au déplacement du poste de traitement mécanique ultérieur en aval ou à l'existence de deux postes de traitement mécanique de part et d'autre du poste de traitement thermique.

Pour des raisons de clarté, on adoptera comme plan la suite opératoire du procédé perfectionné en flux continu.

### 1) Traitement mécanique initial :

Le traitement mécanique complet s'effectue en deux étapes, la première est un traitement mécanique primaire pratiqué avant le traitement thermique qui consiste en une simple réduction mécanique en petites plaquettes- La seconde, pratiquée soit avant et après le four, soit après uniquement consiste en un concassage-écrasement-martelage en vue de rendre les plaquettes, qui seront déshydratées dans le four, de taille, de conformation et de consistance appropriées au traitement ultérieur.

Les déchets bruts en vrac : perches d'éclaircie, remanents forestiers et autres déchets analogues et, de façon générale, tous déchets ligno-cellulosiques sont entassés sur une aire de stockage 1 couverte ou non, puis chargés sur une table 2 d'amenée du bois et acheminés ensuite par un transporteur approprié 3, convoyeur à bande, à chaîne, à plateaux ou autres, vers un poste de réduction mécanique initiale 4 dont le rôle essentiel est de réaliser la réduction mécanique en petits morceaux du type plaquettes suivi d'un calibrage. Le poste de réduction mécanique initial 4 comprend une découpeuse-déchiqueteuse 5, suivie éventuellement d'un broyeur-concasseur 6 dans lequel le broyage est associé à un travail mécanique primaire de dissociation des fibres, broyeur dont la sortie est reliée à un silotampon 7 de régulation par un convoyeur pneumatique 8 pour alimenter, à volume ou poids constant, un poste de traitement thermique 9, par exemple par une vis d'amenée ou un tapis doseur 10 régulés en vitesse.

La découpeuse-déchiqueteuse 5 réalise une première réduction mécanique en plaquettes selon les dimensions moyennes suivantes : Longueur 20 à 40 mm, largeur 10 à 20 mm, épaisseur 5 à 10 mm.

Le silo-tampon 7 comprend une entrée secondaire 11 pour l'admission directe des produits plus fins, sciures ou autres, qui peuvent être traités simultanément par le même procédé et en flux continu régulé.

De préférence, mais non obligatoirement, un traitement mécanique ultérieur de défibrage sera également pratiqué sur le produit sec après traitement thermique dans un four rotatif par un concasseur-défibreur avant le traitement chimique.

Les plaquettes séjournent dans le silo-tampon 7 et, après extraction, sont dirigées vers le poste de traitement thermique 9.

Le broyeur-concasseur 6, identique à celui décrit ci-après, est placé de préférence à l'entrée du four relié à celui-ci par un tapis doseur analogue au tapis doseur 10 calibrant un volume ou un poids constant apporté en continu à vitesse modulable au four rotatif ci-après.

### 2) Concassage-martelage primaire

Comme indiqué ci-dessus, afin de mieux préparer le produit à son traitement thermique, on prévoit au moins un poste intermédiaire de concassage-martelage primaire avant l'entrée dans le poste de traitement thermique 9.

Ce concassage-martelage primaire permet, par un travail d'écrasement, d'augmenter la surface d'échange thermique des morceaux, parcelles et particules de bois ainsi produits, pour améliorer leur déshydratation lors du passage dans le four.

Le concasseur utilisé est analogue à celui qui sera décrit ci-après comme concasseur-défibreur dans la partie appelée "traitement mécanique ultérieur".

En fonction des caractéristiques du produit à obtenir et celles, des déchets de bois utilisés, le concassage-défibrage sera plus ou moins poussé en aval ou en amont du poste de traitement thermique.

La masse volumique de déchets de bois apportés au four est réglable, mais en principe constante pour un régime de fonctionnement donné afin de réaliser le traitement en flux continu régulé.

Le temps de passage dans le four est régulé en fonction du degré d'humidité des déchets de bois.

Les dimensions des déchets de bois varient en fonction des applications visées depuis celles des particules élémentaires (sciures) jusqu'à des petits morceaux de quelques millimètres.

### 3) Traitement thermique :

Le poste de traitement thermique 9 est essentiellement constitué par un four rotatif 12 à air chaud généré par un brûleur 13 à air soufflé alimenté en combustible extérieur sur son entrée principale 14 ou par des déchets de bois avec utilisation après séchage des résidus de calibrage ou de récupération ainsi que des déchets reçus déjà mécaniquement prêts qui sont admis sur une entrée auxiliaire 15.

A titre d'exemple, un brûleur d'une puissance comprise entre 500 000 et 1 000 000 Kcal/h permet d'obtenir un débit de 20 à 30 m³/h pour la production industrielle visée.

Les organes actifs du four sont réglables et commandés en fonctionnement par des mécanismes de régulation en fonction des différents paramètres de conduite du traitement thermique à savoir degré de siccité du bois, nature... Ainsi, la durée de passage dans le four et la puissance calorifique seront réglées et régulées en fonction des disparités des déchets de manière à obtenir des caractéristiques constantes des produits en sortie du four.

Le brûleur 13 développe sa flamme dans une chambre de combustion 16 suivie d'une chambre de chauffe 17 dans laquelle sont déversés par gravité à débit constant les produits déchiquetés provenant de la réduction mécanique initiale suivie de préférence d'une phase de concassage-martelage. Les déchets de plus faible poids sont emportés dans le souffle d'air chaud créé par le brûleur et se trouvent transportés par le flux aéraulique jusqu'à la sortie du four.

La température à l'entrée de la chambre de chauffe s'élève à environ 700 - 800° C.

Le four rotatif 12 affecte la forme d'un tambour horizontal à enveloppe cylindrique calorifugée 18. Il comprend une âme centrale fixe sous la forme d'un tube creux ventilé 19 pourvu d'ailettes inclinées 20 à inclinaison variable en pente descendante de l'entrée 21 du four vers sa sortie 22 de manière à diriger le produit qui tombe en partie supérieure de chaque ailette vers un point de chute situé en aval et assurer ainsi sa progression, son brassage et ses déplacements successifs plus ou moins importants vers la sortie.

La vitesse de rotation du four et l'inclinaison des ailettes sont réglées pour un régime moyen à une vitesse linéaire d'environ 3 mètres/minute, plus lente pour une application en substrat de culture.

Le four comporte un corps cylindrique calorifugé par l'enveloppe 18 et équipé d'au moins deux portées circulaires 23 et 24 conformées en couronnes palières en contact d'entraînement avec des galets 25 et 26.

Le four 12 est entraîné en rotation par un groupe moto-réducteur 27 en prise sur les galets 25 et 26 dont la vitesse est modulable, commandée et régulée par une unité centrale informatique 28 permettant une variation de débit de 15 à 30 m³/h en fonction de la vitesse du traitement ultérieur et des caractéristiques notamment de siccité et de nature des déchets de bois employés. Ce four est également autoréglé et autorégulé à un régime de fonctionnement déterminé quelque soient la quantité et les caractéristiques des produits reçus. L'allure du brûleur 13 est, bien entendu, asservie à la vitesse de rotation du tambour rotatif, elle-même régulée en fonction des paramètres variables relatifs aux caractéristiques du produit à l'entrée du four selon les valeurs de température transmises jar des sondes de température, l'une référencée A, à l'entrée, et l'autre référencée B à la sortie, utilisées comme détecteurs en vue d'une exploitation en mesure différentielle pour commander la régulation de fonctionnement du four.

Le corps du four est équipé sur toute sa surface latérale intérieure de godets 29 longitudinaux et coaxiaux à ouverture sensiblement transversale à chaque plan diamétral, godets disposés selon des tranches successives constituant autant de réceptacles ouverts en mouvement rotatif avec le four dans lesquels tombe la matière glissant sur les ailettes inclinées 20 à pente d'inclinaison variable portées par le tube central 19, matière étant reversée sur celles-ci à chaque rotation lorsque le godet arrive en position haute.

La pente des ailettes et la vitesse de rotation du four déterminent la vitesse du transit des produits dans le four, qui dépend des caractéristiques du produit, notamment son degré de siccité et sa nature, détectées par la différence de température entre l'entrée par la sonde A et la sortie du four par la sonde B. Cette vitesse est modifiée pour obtenir une qualité hygrométrique constante des produits en sortie du four.

Cet agencement intérieur et cette conformation assurent de façon optimale le brassage suffisant du produit pour son homogénéité de traitement et, simultanément, la régularité du débit et l'avance du produit vers la sortie par brassage et tournoiement dans le flux des gaz chauds dispensés par la flamme du brûleur.

Le four rotatif apporte ainsi, après celle du silo-tampon 7, une deuxième régulation de fonctionnement nécessitée par la disparité de nature et de siccité des déchets de bois utilisés.

Le four présente une entrée transversale supérieure 30 par laquelle est déversé le produit dans la chambre de chauffe 17 disposée au-delà de la chambre de combustion 16.

Le four se termine en extrémité opposée par la sortie 22 conformée en cône 31 communiquant avec un caisson d'extraction 32 des produits chauds dans lequel le produit est déversé et arrive par gravité après le passage à travers une écluse 33 dans une vis de transfert 34 qui achemine les plaquettes déshydratées et expansées vers un organe de traitement mécanique ultérieur.

Les gaz chauds sortant sont aspirés dans le caisson d'extraction 32 des produits chauds par un groupe ventilateur-aspirateur 35 puis apportés par surpression aéraulique à un ensemble de filtration centrifuge 36 du type cyclone d'extraction qui a pour but de séparer les fines entraînées des gaz et vapeurs et d'assurer un dépoussiérage poussé.

Les matières volatiles sont rejetées à l'atmosphère tandis que les fines sont apportées directement par gravité à l'entrée de la partie de l'installation concernant le traitement chimique ou déversées dans la vis de transfert 34 en aval de l'organe de traitement mécanique ultérieur.

Le fonctionnement du four varie en fonction de la nature et de la siccité des déchets de bois pour maintenir un degré de déshydratation correspondant à une température de sortie des produits du four d'environ 75°C.

4) Traitement mécanique ultérieur :

Comme indiqué, ce traitement peut être pratiqué avant l'entrée dans le four rotatif mais aussi avant et après.

Le passage dans le four rotatif réalise la dégazéïfication, la déshydratation poussée, l'expansion ainsi que la stérilisation des plaquettes traitées thermiquement. Ensuite, le produit sec encore-chaud est amené par la vis de transfert 34 à un organe spécifique de traitement mécanique ultérieur, conçu pour ce type d'installation, appelé ci-après concasseur-défibreur.

Ce traitement, s'il est pratiqué avant le passage dans le four, peut être supprimé à ce stade.

Cet organe est chargé de réaliser une action à intensité réglable de martelage-broyage et affinage sur le produit encore chaud débarrassé des fines et vapeurs.

Il permet de transformer les plaquettes en parcelles ou particules élémentaires de tailles variables en fonction de l'application visée et de les préparer au traitement chimique en les défibrant par écrasement-martelage et par un broyage d'affinage réglable afin d'obtenir les dimensions moyennes suivantes : longueur 1 à 20 mm, largeur 1 à 10 mm, épaisseur 1 à 5 mm.

Le rendement général du procédé et la qualité du produit se trouvent sensiblement améliorés car on pratique plus efficacement ce traitement mécanique à la sortie du four rotatif sur des plaquettes parfaitement deshydratées et expansées par effet thermique.

Par ailleurs, les plaquettes ainsi défibrées et broyées améliorent le rendement d'imprégnation du traitement chimique car leur surface d'absorption s'en trouve notablement augmentée.

Un exemple de réalisation du concasseur-défibreur utilisé est représenté sur la figure 3.

Comme indiqué, le même type de matériel peut être placé en avant du four rotatif.

Le concasseur-défibreur 37 est constitué d'un caisson 38 traversé en partie haute par la vis de transfert 34 d'acheminement du produit. Ce caisson renferme l'organe rotatif actif de concassage à savoir un rotor de concassage 39.

Le caisson constituant le corps du concasseur-défibreur est rempli totalement des plaquettes élémentaires amenées du four rotatif par la vis de transfert 34. Le remplissage est réglé pour être quasi total et le rester pendant tout le fonctionnement.

En fonctionnement permanent, les parcelles élémentaires arrivent en continu et sont forcées vers le rotor 39 de concassage par le phénomène d'entraînement engendré par la rotation des pièces du rotor 39 portées par un axe 40 relié cinématiquement à un moteur extérieur 41 commandé par l'unité centrale informatique 28.

Ce rotor, de vitesse réglable, comporte des masses frappantes telles que 42 en forme de marteaux articulés 43 montés pivotants sur des tiges longitudinales 44 portées par des flasques transversaux 45 solidaires de l'axe du rotor. Il existe plusieurs flasques transversaux et donc plusieurs groupes de masses frappantes en série sur toute la longueur de l'axe.

Ces masses frappantes tournent avec le rotor et sont convenablement espacées pour présenter entre elles des intervalles tels que 46 qui permettront d'admettre et de passer entre des contre-lames fixes 47 disposées longitudinalement selon une rangée légèrement décalée angulairement en aval par rapport au fond du caisson constituant ainsi une véritable barre d'écrasement 48. Une barre identique 49 est fixée plus en aval vers la sortie.

Ces barres sont fixées chacune sur un support solidaire du caisson.

Pour des raisons de clarté du dessin, sur la coupe longitudinale de la figure 3, la première barre d'écrasement 48 est représentée artificiellement comme fixée en fond de caisson. Son emplacement réel est celui figurant sur la coupe transversale.

La conformation des masses frappantes 42 et des contre-lames 47 et leurs intervalles permettent de retenir momentanément par coincement les parcelles élémentaires pendant toute la durée de concassage réalisant ainsi le travail d'écrasement et de dissociation des fibres nécessaire.

Le concasseur-défibreur 37 utilisé présente les caractéristiques générales techniques de fonctionnement suivantes:

. Vitesse de rotation de la vis de transfert : 60 t/mn

. Vitesse de rotation du rotor : 1500 t/mn

. Débit de sortie : 20 à 25 m³/h.

La vis de transfert 34 traverse l'ensemble du caisson en partie supérieure et se poursuit en aval de la chaîne. Elle sert ainsi, en même temps de vis d'évacuation du produit en flux continu vers le poste aval de traitement chimique après addition des fines récupérées par exemple par déversement à partir de l'ensemble de filtration centrifuge 36.

Afin de pouvoir régler le débit en fonction des caractéristiques du produit d'entrée et celles du produit à obtenir, on a prévu en partie haute du caisson un registre mobile de réglage 50.

Ce registre est constitué dans une version simple par une plaque de déviation longitudinale 51 de forme trapézoïdale effilée de l'entrée vers la sortie et mobile par enfoncement transversal dans la paroi du caisson. Elle constitue un déflecteur de réglage du débit entre l'entrée et la sortie. Ce déflecteur permet de varier le réglage par la modification de la section de passage de par sa position plus ou moins enfoncée dans le caisson 38.

Bien entendu, le moteur d'entraînement du rotor est régulé en fonction de la vitesse d'actionnement de la vis de transfert 34 et piloté par l'unité centrale 28 qui gère l'installation par un programme informatique pour la coordination du fonctionnement d'ensemble en flux continu.

A la sortie du concasseur-défibreur, les parcelles élémentaires déshydratées expansées et convenablement défibrées sont dirigées, après addition des fines, par un organe transporteur, par exemple une vis à inclinaison 52, vers un poste de traitement chimique 53.

Selon une variante, la sortie du concasseur-défibreur alimente un calibreur 54 et un récupérateur 55 effectuant la séparation de parcelles ou particules des fines et poussières qui sont dirigées vers l'entrée auxiliaire 15 du brûleur 13 et utilisées comme combustible selon un circuit de récupération 56 représenté en pointillés.

Bien entendu, on pourra déjà parfaire le travail de réduction mécanique avant l'entrée dans le four par un concasseur-défibreur avec affineur ou non placé en amont comme indiqué ci-dessus, et se dispenser du traitement mécanique ultérieur.

5) Traitement chimique :

Le produit est admis, encore chaud, dans un malaxeur-pulvérisateur linéaire double 57 formé de deux tronçons successifs, amont 58 et aval 59, dont chaque canal récepteur 60 et 61 contient deux vis mélangeuses juxtaposées 62,63 et 64,65 s'imbriquant l'une dans l'autre. Il s'agit de vis de malaxage tournant en sens inverse pour assurer l'avance du produit.

Chaque tronçon du malaxeur est surmonté par une rampe de pulvérisation 66 ou 67 se succédant sur la longueur du malaxeur pour réaliser la mise en oeuvre du traitement chimique par deux pulvérisations ou arrosages distincts en permanence sur les masses de produit contenues dans l'un et l'autre tronçon du malaxeur linéaire double 57.

Les tronçons successifs de malaxage 58 et 59 composant le malaxeur double 57 se suivent sans discontinuité. On y réalise le traitement chimique suivant par pulvérisation, aspersion ou arrosage constant à l'aide des deux rampes successives 66 et 67 d'une solution chimique différente propre à chaque rampe à partir d'une amenée 68 ou 69 raccordée à une ou plusieurs cuve(s) 70, 71 et 72, 73 de solutions identiques ou différentes à utiliser directement ou en mélange.

a) Traitement d'imprégnation-absorption-précipitation :

1. Imprégnation négative par une solution d'un sel de calcium :

Le produit est acheminé ensuite à température ambiante et admis dans un malaxeur linéaire à vis où il subit tout d'abord sur la première partie de la longueur une imprégnation négative par un premier arrosage d'une solution d'un sel de calcium, de préférence le chlorure de calcium, en concentration égale à 50 kg de sel pur par m$^3$ d'eau, soit une concentration en poids de 5%.

La valeur de cette concentration peut varier notablement, préférentiellement dans les limites de 2 à 10 % en fonction des applications envisagées et de la nature du bois.

Par exemple, pour une application en isolation thermique, la concentration pourra augmenter selon le degré de résistance au feu souhaité.

L'arrosage est, par exemple, effectué à température ambiante par une rampe de pulvérisation supérieure en quantité comprise entre 2 et 10 % en volume de produit traité, mais de préférence 5 % jusqu'à pénétration et absorption complètes, ceci à une température de solution égale à l'ambiante, soit 10-30°C sur un produit dont la température est comprise entre 30° C et 60° C, de préférence à une température de 40° C qui est égale à celle atteinte par son cheminement à la température ambiante et par la pulvérisation dès la sortie du four.

Cet arrosage ou pulvérisation s'effectue en continu au cours du malaxage jusqu'à saturation pendant la progression le long du malaxeur par l'intermédiaire d'une rampe de pulvérisation haute disposée le long du malaxeur.

La vitesse de rotation de la vis est réglée pour que le produit avance dans le malaxeur à une vitesse d'environ 3 mètres/mn. On a pu vérifier qu'au bout d'une durée de 2 à 5 minutes, la saturation est atteinte.

Cette première imprégnation effectuée sur un produit chaud dilate complètement les pores du bois déjà ouverts par le traitement mécanique et nettoyés par le traitement thermique. L'ouverture complète des pores permettra au traitement ultérieur de se faire parfaitement au coeur même du bois.

## 2. Imprégnation positive par une solution d'un silicate et précipitation :

On fait agir ensuite, dans le même malaxeur, dès son entrée dans la deuxième partie linéaire du malaxeur, une solution d'un silicate d'un métal alcalin de même concentration, par pulvérisation à température ambiante, à l'aide d'une rampe supérieure en quantité comprise entre 2 et 15 % en volume, mais de préférence 10 %.

Les sels retenus pour ce traitement sont le silicate de sodium ou le silicate de potassium en concentration comprise entre 2 et 15 % en poids, mais de préférence 10 %. Le sel choisi dépend de l'application visée.

Cette réaction s'effectue également sur un produit encore chaud, c'est-à-dire à température comprise entre 30 et 50°C.

L'arrosage s'effectue pendant la durée de transit du produit, soit environ 3 minutes. La réaction chimique s'effectue'en quelques minutes. Au cours de cette réaction, il se forme par précipiation, au plus profond du bois, du silicate de calcium, sel particulièrement dur et inaltérable qui obture les pores, tapisse les microcavités et immobilise les fibres du bois. Cette véritable pétrification par ce sel dur et inaltérable réalise la dévitalisation complète du bois et une augmentation notable de sa résistance physique et chimique.

Le Ph du bois, qui était compris, à l'origine, entre 4 et 5, est amené en sortie à une valeur comprise entre 6,8 et 7, c'est-à-dire égale à la neutralité.

On a formé ainsi un produit inerte, chimiquement neutre qui présente toutes les qualités physiques du bois : isolation, mais aussi, à un degré moindre, celles de la pierre : résistance au feu, résistance mécanique.

Dans le tronçon amont du malaxeur linéaire, on réalise la première imprégnation par pulvérisation jusqu'à saturation du premier sel soluble par exemple du chlorure de calcium ou tout autre sel équivalent, dans toutes les conditions conformes au procédé de base.

Dans le deuxième tronçon, se produit la réaction de précipitation au coeur même du bois d'un sel très dur, le silicate de calcium par pulvérisation jusqu'à gavage d'un deuxième sel soluble par exemple du silicate de sodium ou tout équivalent dans les conditions conformes au procédé de base.

Les produits sont ensuite égouttés et évacués en les dirigeant par une rampe de transfert 74 vers les aires de séchage 75 et de stockage 76.

A titre de variante du traitement chimique, on pourra intervertir les actions du sel de calcium et du silicate employés.

### Variantes de la dernière étape :

On décrira ci-après quelques procédés dérivés par variation de la dernière étape.

On pourra plonger le produit dans un bain colorant noir qui permet d'augmenter le rendement du pouvoir d'absorption et d'accumulation de la chaleur en atténuant les pertes au rayonnement.

La coloration du produit en noir pourra être effectuée de la façon suivante.

On fait agir une quantité réduite de silicate qui ne provoque pas la précipitation totale. Le complément est apporté dans une phase ultérieure sous la forme d'un mélange avec une teinture noire qui précipitera avec la quantité de chlorure de calcium restant libre, ceci à l'extérieur de chaque parcelle élémentaire pour former une carapace de silicate teintée en noir, présente aussi à l'intérieur.

Le silicate joue le rôle de fixateur de la teinture du produit qu'il rendra pratiquement indélébile.

On pourra aussi, par exemple, faire agir le silicate en quantité réduite de moitié et apporter l'autre moitié contenant le colorant noir en phase finale.

On pourra également, dans ce cas, intervertir les sels et incorporer la teinture noire au chlorure de calcium.

On pourra également utiliser, pour la deuxième pulvérisation, une solution ou une suspension composée, en proportions égales, d'une solution du silicate soluble choisi et un agent de durcissement non soluble dispersé dans ladite solution ou composition dont la concentration en silicate est égale ou voisine à celle ci-dessus. L'agent de durcissement préféré est du bioxyde de silicium, mais tout agent équivalent peut convenir. Cet agent a pour but d'améliorer l'isolation des fibres avec le milieu extérieur.

Durant la réaction, il se forme, au plus profond des agrégats traités, du silicate de calcium et un ou plusieurs composés des différents sels en présence avec le bioxyde de silicium et surtout une fixation du bioxyde de silicium au sein même de la matière.

### 6) Traitement complémentaire :

On fait subir ensuite aux agrégats ainsi formés le double traitement supplémentaire suivant.

On pratique un premier traitement ultérieur d'étanchéisation.

### Etanchéisation :

Pour ce faire, on réalise à la suite, dans le même malaxeur, à température ambiante et sur le produit encore chaud entre 20°C et 60°C, une troisième pulvérisation d'une dispersion d'un produit plastifiant, par exemple à base d'une résine synthétique du type styrène-acryl ou équivalente, qui a pour but de créer autour des agrégats un film protecteur de plastification formant une cloison vraiment étanche qui supprime les reprises d'humidité. Le produit employé est hydrofuge mais perméable à la vapeur d'eau, ce qui permet l'assèchement complet du noyau de chaque agrégat après traitement. On l'emploie à raison de 2,5 à 5 Kgs de résine par m³ de produit en dispersion dans 25 litres d'eau.

Le film ainsi créé autour de chaque morceau élémentaire possèdera une faible épaisseur de l'ordre d'un dixième de millimètre.

On a réalisé avec le traitement de base et le premier traitement ultérieur ci-dessus, d'une part une immobilisation et stabilisation parfaites des fibres et, d'autre part, une limitation importante de la capacité à absoption en milieu humide.

Traitement d'enrobage :

On pratique ensuite le deuxième traitement ultérieur qui est un traitement d'enrobage pour améliorer l'aptitude à la liaison avec les liants hydrauliques habituels utilisés en bâtiment.

On décrira ci-après un exemple de traitement d'enrobage applicable sur des agrégats recouverts de leur peau en film synthétique.

On fait passer les agrégats encore chauds dans un bain de saupoudrage silico-calcaire composé, par exemple, des produits suivants selon les proportions ci-après :

1/4 de chaux vive
1/2 de laitier de hauts fourneaux
1/4 de bioxyde de silicium.

Réalisé sur le produit chaud, ce traitement permet de constituer autour des agrégats une carapace isolante et réfractaire montrant une aptitude caractérisée à la liaison avec les principaux liants hydrauliques utilisés en bâtiment pour la fabrication des mortiers ou bétons isolants.

Bien entendu, selon les applications on ne pratiquera que l'un ou l'autre des traitements ultérieurs et ceci à des degrés différents;

De plus, divers traitements de finition peuvent être appliqués, notamment une coloration noire pour des besoins d'absorption thermique ou un revêtement de protection mécanique résistant aux chocs.

Ce nouveau produit apporte un progrès important dans la fabrication des mortiers et bétons destinés à confectionner des chapes et cloisons isolantes que l'on peut réaliser avec les liants hydrauliques habituels sans mise en oeuvre de 'moyens spéciaux ou de précautions particulières à observer.

Le cas échéant, un autre type de traitement supplémentaire concernant une application spécifique est pratiqué à la sortie du malaxeur double dans un bac ou un malaxeur terminal 77 qui permet de procéder à tout traitement chimique complémentaire par une dernière imprégnation simple ou double ou par un bain d'enrobage à l'aide d'un produit pulvérulent ou toute autre opération de traitement complémentaire.

Il s'agit, par exemple, de l'imprégnation et de la fixation de colles, colorants, durcisseurs et d'autres produits de finition conférant au produit selon l'invention des propriétés supplémentaires.

7) Séchage-stabilisation

Le produit ainsi traité est évacué vers une aire supplémentaire de séchage 78 par une rampe d'égouttage 79 où il séjourne pendant une durée de stabilisation pendant laquelle se réalisent la fixation et le durcissement.

Le produit est alors repris par une ensacheuse 80 ou stocké en vrac sous couverture, dans un silo 81 ou à l'air libre pour être emporté et transporté en vrac, par exemple à l'aide de bennes céréalières 82.

. Régulation du flux continu :

On note dans l'installation selon l'invention au moins trois niveaux différents de régulation et d'adaptation de manière à permettre une production industrielle en flux continu quelque soient la nature, la qualité et les caractéristiques des déchets utilisés.

. Régulation d'approvisionnement du concasseur :

La liaison entre le silo-tapon et le concasseur primaire est un tapis doseur à vitesse modulable ou à vis d'extraction à vitesse de rotation variable de manière à réaliser un débit fixe d'approvisionnement du concasseur permettant à ce dernier de fonctionner dans les meilleures conditions.

. Régulation d'approvisionnement du four et du poste de traitement chimique :

Le concasseur-défibreur présente deux réglages possibles.

Le premier concerne la vitesse de rotation du rotor et le débit de sortie.

Le deuxième se rapporte à la table de coupe dont le pas d'avancement est règlable permettant au flux du produit de rester un temps plus ou moins long dans le concasseur-défibreur.

Ces deux possibilités permettent d'obtenir un effet régulateur et une variation de production entre 15 et 30 m3/h suivait la demande.

. Régulation de fonctionnement du four :

On adapte le traitement thermique sur des produits calibrés à débit constant, mais de nature et de degré d'humidité différents. Pour ce faire, les deux sondes de température A et B, disposées de part et d'autre du four, l'une A à l'entrée et l'autre B en sortie sont utilisées comme détecteurs pour réguler le fonctionnement régulé du four'de manière à obtenir un traitement thermique de qualité constante en agissant sur :-

. la puissance du brûleur

. la vitesse de rotation du four

. l'inclinaison des pales pour faire varier la vitesse de progression du produit à l'intérieur du four.

Les différentes actions de régulation et leur déroulement proviennent du programme de marche du four

Si le procédé et l'installation selon l'invention ont été décrits ci-dessus en détail, il est bien entendu qu'ils ne sauraient se limiter aux seuls moyens indiqués, mais qu'au contraire ils en embrassent toutes les variantes.

## Revendications

1. Installation industrielle pour la production en flux continu de parcelles ou particules stabilisées à partir de déchets de bois, comportant notamment un poste de réduction mécanique primaire (4) du bois, un poste de traitement thermique (9) à fonctionnement régulé composé d'un four rotatif (12) à air chaud généré par un brûleur (13) dont la flamme se développe dans une chambre de combustion (16) suivie d'une chambre de chauffe (17) dans laquelle est prévue une sonde A de mesure de la température, four (12) entraîné en rotation par un groupe moto-réducteur (27) en prise sur des galets (25 et 26) en appui d'entraînement sur des portées circulaires (23 et 24) extérieures au corps du four (12), la sortie du four comportant une sonde B de mesure de la température pour une mesure différentielle de la température entre A et B, en vue d'une commande en fonctionnement régulé, sortie communiquant avec un caisson d'extraction (32) des produits chauds par lequel le produit arrive par gravité puis passe à travers une écluse (33) dans une vis de transfert (34) alimentant par une vis à inclinaison (52) un poste de traitement chimique (53) comprenant un malaxeur-pulvérisateur linéaire double (57) surmonté par deux rampes successives de pulvérisation (66 et 67) pour réaliser les mises en oeuvre successives de deux traitements chimiques par deux pulvérisations, caractérisée en ce que la sortie du poste de réduction mécanique est reliée à un silotampon (7) de régulation, avec une entrée secondaire pour les sciures et dont la sortie alimente la chambre de chauffe du poste de traitement thermique (9) par un tapis doseur (10), d'autre part en ce que le four comporte des ailettes inclinées (20) à pente variable portées par un tube central (19), d'autre part encore en ce que la vis de transfert (34) assure en outre la liaison avec un poste de traitement mécanique à concasseur-défibreur (37) à registre réglable, placé en aval du poste de traitement thermique (9) et traversé par la vis de transfert (34), et enfin en ce que l'installation se termine par un poste de traitement complémentaire sous la forme d'un bac ou d'un malaxeur terminal (77) dans lequel passe le produit avant d'être évacué vers un silo final (81) ou une ensacheuse (80).

2. Installation selon la revendication 1, caractérisée en ce que le poste de réduction mécanique primaire (4) comprend une table d'amenée (2), une découpeuse-déchiqueteuse (5) alimentant à travers un convoyeur pneumatique (8) le silo-tampon (7) et d'un concasseur-défibreur relié par une vis d'amenée (10) à un poste de traitement thermique (9) alimenté à la demande.

3. Installation selon la revendication 1, caractérisée en ce que le corps du four rotatif présente une enveloppe cylindrique calorifugée (18) et une âme centrale fixe sous la forme d'un tube creux ventilé (19) équipé d'ailettes inclinées (20) en pente descendante de l'entrée vers la sortie et en ce que la surface intérieure de l'enveloppe cylindrique (18) comporte des godets longitudinaux (29) et coaxiaux à ouverture sensiblement transversale à chaque plan diamétral constituant des réceptacles ouverts en mouvement rotatif avec le four.

4. Installation selon la revendication 1, caractérisé en ce que la sortie supérieure du caisson d'extraction (32) des produits chauds est reliée à un groupe ventilateur-aspirateur (35) pour apporter lesdits produits chauds par surpression aéraulique à un ensemble de filtration centrifuge (36) réalisant l'extraction et la séparation entre les fines et les matières volatiles.

5. Installation selon la revendication 1, caractérisée en ce que la vis de transfert (34) traverse un caisson (38) du concasseur-défibreur (37) placé en partie haute de celui-ci, en ce que le concasseur-défibreur (37) est plein en régime permanent et en ce qu'il comporte en partie supérieure un registre réglable (50) formé d'une plaque mobile en déviation longitudinale (51) de forme trapézoïdale effilée de l'entrée vers la sortie.

6. Installation selon les revendications 1 et 4, caractérisée en ce que les fines sont recyclées soit à une entrée auxiliaire du brûleur par un circuit de récupération (56) soit dans la vis de transfert (34) en aval du concasseur-défibreur (37).

7. Installation selon la revendication 1, caractérisée en ce que le malaxeur-linéaire double (57) est formé d'un tronçon amont (58) suivi d'un tronçon aval (59) contenant chacun deux vis mélangeuses juxtaposées (62,63) et (64,65) s'imbriquant l'une dans l'autre et tournant en sens inverse, les vis étant surmontées par les rampes (66 et 67) propres à chaque tronçon, raccordées à une ou plusieurs cuves (70,71) et (72,73).

## Patentansprüche

1. Industrieanlage zur kontinuierlichen Produktion von stabilisierten Teilchen oder Partikeln aus Holzabfällen, insbesondere mit einer Station (4) zur primären mechanischen Reduktion des Holzes, einer gesteuerten Wärmebehandlungsstation (9), die einen Drehofen (12) mit von einem Brenner (13) erzeugter Heißluft aufweist, dessen Flamme sich in einer Brennkammer (16) entwickelt, an die eine Heizkammer (17) anschließt, in der eine Temperaturmeßsonde A vorgesehen ist, wobei der Ofen (12) durch einen Getriebemotorsatz (27), der über Walzen (25 und 26) mit dem kreisförmigen Umfang (23 und 24) auf der Außenseite des Ofenkörpers (12) in Antriebsverbindung steht, in Drehung versetzt wird, und der Ausgang des Ofens eine Temperaturmeßsonde B zur Temperaturdifferenzmessung zwischen A und B für einen Befehl zum geregelten Betrieb aufweist und mit einem Extraktionsbehälter (32) für die heißen Teile verbunden ist, durch den die Teile infolge Schwerkraft nach Durchlaufen einer Schleuse (33) eine Förderschnecke (34) erreichen, die über eine Neigungsschnecke (52) eine chemische Behandlungsstation (53) versorgt, die einen doppelten linearen Zerstäuber-Mischer (57) aufweist, der von zwei aufeinanderfolgenden Zerstäuberrampen (66 und 67) zur Durchführung von zwei aufeinanderfolgenden chemischen Behandlungen für zwei Zerstäubungen überbaut ist, dadurch gekennzeichnet, daß der Ausgang der Station zur mechanischen Reduktion an ein Puffersilo (7) zur Regulierung angeschlossen ist, das einen Sekundäreinlaß für die Sägespäne aufweist und dessen Auslaß die Heizkammer der Wärmebehandlungssation (9) über ein Dosierer (10) versorgt, daß der Ofen an einer Mittelröhre (19) gehaltene geneigte Flügel (20) variabler Neigung aufweist, daß die Förderschnecke (34) darüber hinaus die Verbindung mit einer mechanischen Brech-Zerfaser-Station (37) mit regelbarem Register sicherstellt, die stromab der Wärmebehandlungssation (9) angeordnet und von der Förderschnecke (34) durchdrungen ist und daß die Anlage in einer komplimentären Behandlungsstation in Form eines Behälters oder eines Endmischers (77) endet, den das Produkt passiert, bevor es in ein Endsilo (81) oder eine Absackmaschine (80) abgezogen wird.

2. Anlage nach Anspruch 1, dadurch gekennzeichnet, daß die Station (4) zur primären mechanischen Reduktion einen Zuführtisch (2), eine Schneid-Shredder-Vorrichtung (5), die über einen pneumatischen Förderer (8) das Puffersilo (7) versorgt, und eine Brech-Zerfaser-Vorrichtung aufweist, die über eine Förderschnecke (10) mit einer Wärmebehandlungsstation (9) mit Bedarfsversorgung verbunden ist.

3. Anlage nach Anspruch 1, dadurch gekennzeichnet, daß der Körper des Drehofens eine wärmedämmende zylindrische Hülle (18) und einen zentralen festen Kern in Form einer hohlen ventilierten Röhre (19) aufweist, die mit den geneigten Flügeln (20) unter einer vom Einlaß zum Auslaß fallenden Neigung versehen ist, und daß die Innenfläche der zylindrischen Hülle (18) in Längsrichtung und koaxial angeordnete Becher (29) mit einer im wesentlichen quer zu jeder Querschnittsebene ausgerichteten Öffnung aufweist, die offene Aufnahmen in Drehrichtung des Ofen bilden.

4. Anlage nach Anspruch 1, dadurch gekennzeichnet, daß der obere Auslaß des Extraktionsbehälters (32) für die heißen Produkte mit einer Saug-Lüfter-Vorrichtung (35) verbunden ist, um die heißen Produkte unter Luft-Überdruck zu einer Fliehkraft-Filtervorrichtung (36) zu bringen, in der die Feinstoffe und die flüchtigen Stoffe extrahiert und getrennt werden.

5. Anlage nach Anspruch 1, dadurch gekennzeichnet, daß die Förderschnecke (34) den Behälter (38) der Brech-Zerfaser-Vorrichtung (37) in dessem oberen Bereich durchläuft, daß die Brech-Zerfaser-Vorrichtung (37) ständig gefüllt ist und daß sie im oberen Bereich ein Regelregister (50) aufweist, das von einer beweglichen trapezförmigen, sich vom Einlaß zum Auslaß verjüngenden Platte (51) mit Längsablenkung gebildet ist.

6. Anlage nach Anspruch 1, dadurch gekennzeichnet, daß die Feinstoffe über einen Rückgewinnungskreis (56) einem Hilfseinlaß des Brenners oder in die Förderschnecke stromab der Brech-Zerfaser-Vorrichtung (37) zurückgeführt werden.

7. Anlage nach Anspruch 1, dadurch gekennzeichnet, daß der doppelte lineare Mischer (57) von einem stromauf liegenden Teilstück (58) und einem anschließenden stromab liegenden Teilstück (59) gebildet ist, die jeweils zwei nebeneinanderliegende, ineinandergreifende und in Gegensinn drehende Mischschnecken (62,63) und (64, 65) aufweisen, wobei die Schnecken von jedem Teilstück zugeordneten Rampen (66 und 67), die an einen oder mehrere Tanks (70, 71) und (72, 73) angeschlossen sind, überbaut sind.

## Claims

1. Industrial arrangement for the production in a continuous flow of stabilised fragments or particles from waste wood, comprising in particular a primary mechanical reduction station (4) for the wood, a thermal processing station (9) with controlled operation, comprising a rotary furnace (12) with hot air generated by a burner (13), the flame of which develops in a combustion chamber (16) followed by a heating chamber (17) in which there is provided a temperature measuring probe A, the furnace (12) being driven for rotation by a reduction gear motor group (27) engaged with rollers (25 and 26) supported-for driving on, circular bearing surfaces (23 and 24) outside the body of the furnace (12), the outlet of the furnace having a temperature measuring probe B for differential measurement of the temperature between A and B, for the purpose of regulation for controlled operation, which outlet is in communication with, an extraction bunker (32) for the hot products, with the product arriving by way of this bunker by gravity and then passing through a feeder (33) into a transfer screw (34) supplying, by way of a slanting screw (52), a chemical processing station (53) comprising a rouble linear mixer-pulverizer (57) having two successive pulverization ramps (66 and 67) above it for carrying out successive implementations of two chemical treatments by means of two pulverizations, characterised in that the outlet of the mechanical reduction station is connected to a control buffer hopper (7) having a second inlet for sawdust, the output of which buffer hopper supplies the heating chamber of the thermal processing station (9) by means of a dosing conveyor (10), and in that the furnace comprises inclined blades (20) having a variable slope and carried by a central tube (19), and in that, in addition, the transfer screw (34) further ensures connection to a mechanical processing station having a crusher-grinder (37) with an adjustable flap, which mechanical processing station is situated downstream of the thermal processing station (9) and has the transfer screw (37) passing through it, and lastly in that the arrangement ends in an additional processing station in the form of an end vat or mixer (77) into which the product passes before it is evacuated towards a final hopper (81) or a bagging machine (80).

2. Arrangement according to claim 1, characterised in that the primary mechanical reduction station (4) comprises a feed table (2), a cutter-shredder (5) supplying the buffer hopper (7) by way of a pneumatic conveyor (8), and a crusher-grinder connected by way of a feed screw (10) to a thermal processing station (9) supplied on demand.

3. Arrangement according to claim 1, characterised in that the body of the rotary furnace has a heat-insulated cylindrical case (18) and a fixed central core in the form of a ventilated hollow tube (19) provided with inclined blades (20) sloping downwards from the inlet towards the outlet, and in that the inner surface of the cylindrical case (18) comprises coaxial, longitudinal cups (29) opening substantially transversely to each diametric plane and constituting open receptacles for rotary movement with the furnace.

4. Arrangement according to claim 1, characterised in, that the upper outlet of the extraction bunker (32) for the hot products is connected to a suction ventilator group (35) for bringing the said hot products by means of excess ventilation pressure to a centrifugal filtration unit (36) carrying out the extraction and separation of the fines and the volatile materials.

5. Arrangement according to claim 1, characterised in that the transfer screw (34) passes through a bunker (38) of the crusher-grinder (37) situated in the upper part of the said crusher-grinder, in that the crusher-grinder (37) is full in the steady state condition and in that it comprises in the upper quart an adjustable flap (50) formed by a plate (51) which can move for longitudinal deviation and has a trapezoid shape tapering from the inlet towards the outlet.

6. Arrangement according to claims 1 and 4, characterised in that the fines are recycled either at an additional inlet or the burner by means of a recovery circuit (56) or in the transfer screw (34) downstream of the crusher-grinder (37).

7. Arrangement according to claim 1, characterised in that the double linear mixer (57) is formed by an upstream section (58) followed by a downstream section (59) each containing two mixing screws (62, 63) and (64, 65) placed side by side, overlapping with each other and rotating in an opposite direction, these screws having above them ramps (66 and 67) belonging to each section and connected to one or several vessels (70, 71) and (72, 73).

FIG.1

EP 0 318 569 B1

FIG.2

EP 0 318 569 B1

FIG.3

FIG.4

EP 0 318 569 B1

FIG.5

13 16 17 12 35 32 34

30 23 10 6 7 8 5 2 3 24 34 37 38 36

FIG.6

FIG.8

FIG.7

19